# EUROPEAN PATENT SPECIFICATION

(11) **EP 4 444 812 B1**
(45) Date of publication and mention of the grant of the patent: **04.11.2026**
(21) Application number: 21966801.9
(22) Date of filing: 10.12.2021
(51) Int. Cl.: C09J 123/08, C09J 131/04, C09J 133/08, C09J 135/00, B32B 27/28, B32B 27/18

(54) **MULTI-LAYER STRUCTURES COMPRISING SILANE COUPLING AGENTS**
MEHRSCHICHTSTRUKTUREN MIT SILAN-HAFTVERMITTLERN
STRUCTURES MULTICOUCHES COMPRENANT DES AGENTS DE COUPLAGE DE SILANE

(43) Date of publication of application: 16.10.2024
(73) Proprietor: Dow Global Technologies LLC, Midland, MI 48674 (US)
(72) Inventor: REN, Shijie, Shanghai 201203 (CN); YAN, Qiangqiang, Shanghai 201203 (CN); CHEN, Hongyu, Shanghai 201203 (CN); MIAO, Wenke, Shanghai 201203 (CN)
(74) Representative: Boult Wade Tennant LLP
(86) International application number: PCT/CN2021/137003
(87) International publication number: WO 2023/102879

(56) References cited:
- CN-A- 103 756 577
- CN-A- 103 756 577
- JP-A- H09 176 595
- JP-A- H09 176 598
- US-A- 4 133 789
- US-A- 4 769 406

## Description

### TECHNICAL FIELD

Embodiments described herein generally relate to multi-layer structures, and specifically relate to multi-layer structures comprising silane coupling agents.

### BACKGROUND

Polyvinyl chloride (PVC) is the world's third-most widely produced synthetic plastic polymer (after polyethylene and polypropylene). Due to its good performance e.g., flame retardancy, mechanical strength, corrosion resistance, heat resistant, foamability, etc., PVC has been widely used in building materials, flooring, artificial leather, pipe, wire and cable, non-food packing, bottles, foam materials, sealants, fibers, etc.
CN103756577A relates to a PVC (polyvinyl chloride)/metal bonding hot melt adhesive film.

Anti-corrosion panels are applied as roofing and walls for various industrial facilities where anti-corrosion is highly required. PVC may be utilized for the construction of anti-corrosion panel by the lamination of PVC onto metal using binder. However, for solvent free binders, the adhesion onto PVC is by polar or secondary valence bonding instead of covalent bonds, so the bonding at high temperature (>80 °C) is still a challenge. Accordingly, improved bonding for PVC to metal is required in anti-corrosion panel.

### SUMMARY

Embodiments of the present disclosure meet those needs by using silane coupling agents which provides adhesion by increasing the polarity and reactivity of the PVC substrate surfaces meanwhile forming chemical bonds with binder layer or on the formation of an interlayer between substrate and binder.

Embodiments incorporating silane coupling agents can be employed either in the form of a primer for pretreating PVC, or as an additive compounded/soaked into the tie layer resins. Due to the silane coupling agent in the tie layer or added as a primer on the tie layer, chemical reactions are trigged to form covalent bonds between PVC and tie layer. This tie layer, which bonds to the PVC may also bond with the metal layer (e.g., steel). Alternatively, another layer (for example, another tie layer comprising maleic anhydride grafted polyethylene resins) may be used to assist in the bonding with the metal layer. This tie layer package possesses good bonding performance at high temperatures.

According to at least one embodiment of the present invention, a multi-layer structure is provided. The multi-layer structure comprises at least one polyvinyl chloride (PVC) layer, at least one metal layer, and at least one tie layer adhering the metal layer to the PVC layer. The tie layer comprises: 5 to 90 wt.% of at least one ethylene acrylate copolymer, wherein the acrylate is selected from vinyl acetate, alkyl acrylate, or maleic anhydride mono ester; and 5 to 95 wt.% of terpolymer represented by the formula of E/V/W, wherein E is ethylene, V is an acrylic ester comonomer selected from vinyl acetate, alkyl acrylate, or maleic anhydride mono ester, and W is a functional group selected from an epoxy, maleic anhydride, and a carboxyl group. The multi-layer structure includes silane coupling agent disposed in the tie layer, applied as a primer layer onto the PVC layer, or both, wherein the silane coupling agent comprises a structure of Z-(CH₂)ₙ-SiX_{q}Y_{3-q}, where n = 1-16; X=CH₃O or C₂H₅O-; q = 1,2, or 3; Y = H, C₁-C₂₀ alkyl, aryl, CH₃OH- or C₂H₅O-; Z = H₂N-, CH₂ = CH-, CH₂ = C(CH₃)-COO-, Epoxy - CH₂O, NH-, OH-, or HS-. In a further aspect, the invention provides the anti-corrosion panel of claim 15.

These and other embodiments are described in more detail in the following Detailed Description.

### DETAILED DESCRIPTION

Specific embodiments of the present application will now be described. These embodiments are provided so that this disclosure will be thorough and complete and will fully convey the scope of the subject matter to those skilled in the art.

The term "polymer" refers to a polymeric compound prepared by polymerizing monomers, whether of a same or a different type. The generic term polymer thus embraces the term "homopolymer," which usually refers to a polymer prepared from only one type of monomer as well as "copolymer," which refers to a polymer prepared from two or more different monomers. The term "interpolymer," as used herein, refers to a polymer prepared by the polymerization of at least two different types of monomers. The generic term interpolymer thus includes a copolymer or polymer prepared from more than two different types of monomers, such as terpolymers.

"Polyethylene" or "ethylene-based polymer" shall mean polymers comprising greater than 50% by mole of units derived from ethylene monomer. This includes ethylene-based homopolymers or copolymers (meaning units derived from two or more comonomers). Common forms of ethylene-based polymers known in the art include, but are not limited to, Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE).

The term "propylene-based polymer," or "polypropylene" as used herein, refers to a polymer that comprises, in polymerized form, refers to polymers comprising greater than 50% by mole of units which have been derived from propylene monomer. This includes propylene homopolymer, random copolymer polypropylene, impact copolymer polypropylene, propylene/α-olefin copolymer, and propylene/α-olefin copolymer.

The term "LLDPE," includes resin made using Ziegler-Natta catalyst systems as well as resin made using single-site catalysts, including, but not limited to, bis-metallocene catalysts (sometimes referred to as "m-LLDPE"), phosphinimine, and constrained geometry catalysts, and resins made using post-metallocene, molecular catalysts, including, but not limited to, bis(biphenylphenoxy) catalysts (also referred to as polyvalent aryloxyether catalysts). LLDPE includes linear, substantially linear, or heterogeneous ethylene-based copolymers or homopolymers. LLDPEs contain less long chain branching than LDPEs and include the substantially linear ethylene polymers, which are further defined in U.S. Patent No. 5,272,236, U.S. Patent No. 5,278,272, U.S. Patent No. 5,582,923 and U.S. Patent No. 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and blends thereof (such as those disclosed in U.S. Patent No. 3,914,342 and U.S. Patent No. 5,854,045). The LLDPE resins can be made via gas-phase, solution-phase, or slurry polymerization or any combination thereof, using any type of reactor or reactor configuration known in the art.

Reference will now be made in detail to embodiments of multi-layer structures as described herein. The multi-layer structure includes at least one polyvinyl chloride (PVC) layer, at least one metal layer, and at least one tie layer adhering the metal layer to the PVC layer. The tie layer comprises 5 to 90 wt.% of at least one ethylene acrylate copolymer, wherein the acrylate is selected from vinyl acetate, alkyl acrylate, or maleic anhydride mono ester. The tie layer also comprises 5 to 95 wt.% of terpolymer represented by the formula of E/V/W, wherein E is ethylene, V is an acrylic ester comonomer selected from vinyl acetate, alkyl acrylate, or maleic anhydride mono ester, and W is a functional group selected from an epoxy, maleic anhydride, and a carboxyl group.

Additionally, the multi-layer structure includes silane coupling agent disposed in the tie layer, applied as a primer layer onto the PVC layer, or both, wherein the silane coupling agent comprises a structure of Z-(CH₂)ₙ-SiX_{q}Y_{3-q}, where n = 1-16; X=CH₃O or C₂H₅O-; q = 1,2, or 3; Y = H, C₁-C₂₀ alkyl, aryl, CH₃OH- or C₂H₅O-; Z = H₂N-, CH₂ = CH-, CH₂ = C(CH₃)-COO-, Epoxy - CH₂O, NH-, OH-, or HS-.

The metal layer may comprise various materials familiar to the skilled person. For example, the metal layer may comprise steel or aluminum. In a specific embodiment, the metal layer may comprise steel.

As stated above regarding the tie layer, the ethylene acrylate copolymer may comprise alkyl acrylate. In one or more embodiments, the alkyl acrylate comprises methyl acrylate, methacrylate, ethyl acrylate, or n-butyl acrylate, or isobutyl acrylate.

The ethylene acrylate may comprise from 0.1 to less than 50 wt.% acrylate monomer, from 1 to 40 wt.% acrylate monomer, from 5 to 30 wt.% acrylate monomer, from 10 to 30 wt.% acrylate monomer, or from 15 to 25 wt.% acrylate monomer.

The tie layer may comprise from 10 to 80 wt.% of the at least one ethylene acrylate copolymer, from 25 to 75 wt.%, from 50 to 75 wt.%, or from 25 to 50 wt.% ethylene acrylate copolymer.

The ethylene acrylate copolymer may comprise a density from 0.900 to 0.975 grams/cubic centimeter (g/cc), from 0.925 to 0.975 g/cc, or from 0.930 to 0.950 g/cc. The ethylene acrylate copolymer may comprise a melt index (I₂) of 0.5 to 40 g/10 mins. as measured according to ASTM D1238 (2.16 kg/190°C), from 1 to 10 g/10 mins, from 1 to 5 g/10 mins, or from 1.5 to 3.5 g/10 mins. Moreover, the ethylene acrylate copolymer may have a melting temperature of 80 to 100 °C, 85 to 95 °C, or from 90 to 94 °C as measured according to ASTM D3418.

Moreover, as stated above, the tie layer comprises 5 to 95 wt.% of terpolymer represented by the formula of E/V/W. The ethylene monomer E may be present in an amount of at least 50 wt.% to 99 wt.% within the terpolymer, from 55 wt.% to 90 wt.%, from 60 to 85 wt.%, from 65 to 80 wt.%, or from 70 to 80 wt.% within the terpolymer.

Further as stated above, the acrylic ester comonomer V is selected from vinyl acetate, alkyl acrylate, or maleic anhydride mono ester. In a specific embodiment, the monomer V may comprise vinyl acetate. The acrylic ester comonomer V may be present in an amount from 0.1 to 50 wt.%, from 1 wt.% to 45 wt.% within the terpolymer, from 5 wt.% to 30 wt.%, from 5 to 25 wt.%, from 10 to 25 wt.%, or from 10 to 20 wt.% within the terpolymer.

The W functional group comonomer is selected from an epoxy, maleic anhydride, and a carboxyl group. In one or more embodiments, the epoxy monomer comprises glycidyl methacrylate. The W functional group may be present in an amount may be present in an amount from 0.1 to 50 wt.%, from 1 wt.% to 45 wt.% within the terpolymer, from 2 wt.% to 30 wt.%, from 3 to 20 wt.%, or from 5 to 10 wt.% within the terpolymer.

The terpolymer may comprise a density from 0.925 to 0.975 grams/cubic centimeter (g/cc), from 0.930 to 0.970 g/cc, or from 0.940 to 0.960 g/cc. The terpolymer may comprise a melt index (I₂) of 0.5 to 20 g/10 mins. as measured according to ASTM D1238 (2.16 kg/190°C), from 2 to *15 g*/*10* mins, from 4 to 10 g/10 mins, or from 7 to 9 g/10 mins. Moreover, the terpolymer may have a melting temperature of 70 to 100 °C, 75 to 90 °C, or from 80 to 85 °C as measured according to ASTM D3418.

The tie layer comprises both the ethylene acrylate copolymer and the terpolymer. In embodiments, the tie layer may comprise ethylene acrylate copolymer in an amount ranging from a lower limit of 10 wt.%, 20 wt.%, 30 wt.%, 40 wt.%, 50 wt.%, 60 wt.%, 70 wt.%, 80 wt.%, or 90 wt.% to an upper limit of 20 wt.%, 30 wt.%, 40 wt.%, 50 wt.%, 60 wt.%, 70 wt.%, 80 wt.%, 90 wt.%. Similarly, the tie layer comprise terpolymer in an amount ranging from a lower limit of 10 wt.%, 20 wt.%, 30 wt.%, 40 wt.%, 50 wt.%, 60 wt.%, 70 wt.%, 80 wt.%, or 90 wt.% to an upper limit of 20 30 wt.%, 40 wt.%, 50 wt.%, 60 wt.%, 70 wt.%, 80 wt.%, 90 wt.%, or 95 wt.%.

The multi-layer structure comprises a silane coupling agent having the Z-(CH₂)ₙ-SiX_{q}Y_{3-q}, where n = 1-16; X=CH₃O or C₂H₅O-; q = 1,2, or 3; Y = H, C₁-C₂₀ alkyl, aryl, CH₃OH- or C₂H₅O-; Z = H₂N-, CH₂ = CH-, CH₂ = C(CH₃)-COO-, Epoxy - CH₂O, NH-, OH-, or HS-. In further embodiments, the Z= H₂N-.

In specific embodiments, the silane coupling agent may comprise the structure of one or more of the following structures:

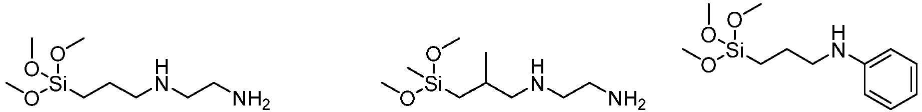

Moreover, the silane coupling agent may comprise one or more alkoxysilanes, aminosilanes, or aminoalkoxysilanes. Furthermore, the silane coupling agent may comprise one or more of the following: (3-Aminopropyl)trimethoxysilane (CAS 13822-56-5); (3-Aminopropyl)triethoxysilane (CAS 919-30-2); 3-Aminopropyl(diethoxy)methylsilane (3179-76-8); N-[3-(Trimethoxysilyl)propyl]ethylenediamine (CAS 1760-24-3); (3-((2-Aminoethyl)amino)propyl)silanetriol (CAS 68400-09-9); and 3-Triethoxysilylpropyl)ethylenediamine (CAS 5089-72-5).

As stated above, the silane coupling agent may be added as a primer layer, compounded into the tie layer, or both. When added as a primer layer, the silane coupling agent may be applied at an amount from 0.01 to 100 g/m², from 1 to 20 g/m², or from 5 to 10 g/m². Alternatively, when compounded in the tie layer, tie layer comprises from 0.01 to 10 wt.%, from 0.5 to 7.5 wt.%, or from 1 to 5 wt.% silane coupling agent.

Various applications are contemplated for the present multi-layer structures. As stated above, multi-layer structures may be incorporated into anti-corrosion panels.

### Optional Ingredients

Various optional ingredients are considered possible for the multi-layer structures. For example, the multi-layer structures may comprise antioxidant (AO). These AO may include but are not limited to: hindered phenolic AO such as IRGANOX 1010 (CAS No. 6683-19-8), IRGANOX 1024 (CAS No. 32687-78-8), IRGANOX 1035 (CAS No. 41484-35-9), IRGANOX 1076 (CAS No. 2082-79-3), IRGANOX 1098 (CAS No. 23128-74-7), IRGANOX 1135 (CAS No. 125643-61-0), IRGANOX 259 (CAS No. 35074-77-2), IRGANOX 1330 (CAS No. 1709-70-2), IRGANOX 3114 (CAS No. 27676-62-6), IRGANOX 565 (CAS No. 991-84-4), IRGANOX 245 (CAS No. 36443-68-2), IRGANOX 3052 (CAS No. 61167-58-6), IRGANOX 3790 (CAS No. 40601-76-1), IRGANOX 1520 (CAS No. 110553-27-0), IRGANOX 1726 (CAS No. 110675-26-8); phosphite AO including IRGAFOS 168 (CAS No. 31570-04-4), IRGAFOS 38 (CAS No. 145650-60-8), IRGAFOS 12 (CAS No. 80410-33-9), IRGAFOS TNPP (CAS No. 26523-78-4); thioether AO such as IRGANOX PS 800 (CAS No. 123-28-4), IRGANOX PS 802 (CAS No. 693-36-7), or the combinations of more than two AO among them.

Additional polymer materials are contemplated for use in the multi-layer structures. For example, the multi-layer structures may comprise one or more of polymethyl methacrylate (PMMA), HDPE, LLDPE, polyolefin elastomer (POE), polypropylene, ethylenepropylene copolymer, and combinations thereof.

Moreover, the tie layer may optionally comprise up to 1 wt.% nonionic wetting agent, which may be added when the silane is dissolved into water before applying as a primer.

### Method of Making

Various methodologies are considered suitable for preparing the present multi-layer structures. For example, the silane coupling agent may be compounded with the polymer resin in the tie layer using various blend and pre-blending techniques. For example, the compounding may involve a soaking process (e.g., by blending silane with resins and shaking at lower than melting temperature for several hours), blending with a twin screw extruder, blending with a BUSS kneader, blending with a single screw extruders, blending with a batch mixer, etc. Additionally, when added into the tie layer film, the tie layer film may be produced using blown film technology or casting film technology.

When applying the silane coupling agent as a primer layer, the primer layer can be coated via spray coating, roller coating, or immersing PVC surface into a silane solution.

### TEST METHODS

### 180° Peel Strength Test

The 180° Peel Strength Test was conducted on an Instron machine equipped with an environmental cabinet according ASTM D1876. The samples were heated at 50 °C and then pulled at 100 mm/min until break.

### Density

Density was measured according to ASTM D792-13 and is reported in grams per cubic centimeter (g/cm³).

### Melt Index (I₂)

Melt index (I₂)was measured according to ASTM D 1238-13 using conditions of 190 °C/2.16 kilograms (kg). Results were reported in units of grams eluted per 10 minutes (g/10 min.).

### EXAMPLES

The following examples illustrate features of the present disclosure but are not intended to limit the scope of the disclosure. The following experiments analyzed the performance of embodiments of multi-layer structures described herein.

### Materials Used

The PVC film was supplied by Sinopharm Chemical Reagent Co., Ltd (SCRC) and has the following dimensions thickness of 100 µm and width of 1 m.

Tie resin 1 is an ethylene methacrylate copolymer comprising 24 wt.% methacrylate comonomer. Tie resin 1 has a melt index (I₂) of 2 g/10 mins. as measured according to ASTM D1238 (2.16 kg/190°C).

Tie resin 2 is a terpolymer comprised of: ethylene monomer, 15 wt.% vinyl acetate (VA) comonomer; and 9 wt.% glycidyl methacrylate (GMA) comonomer. Tie resin 2 has a melt index (I₂) of 8 g/10 mins. as measured according to ASTM D1238 (2.16 kg/190°C).

Tie Resins 1 and 2 may be prepared by standard free-radical copolymerization methods, using high pressure, operating in a continuous manner. Monomers are fed into the reaction mixture in a proportion, which relates to the monomer's reactivity, and the amount desired to be incorporated. In this way, uniform, near-random distribution of monomer units along the chain is achieved. Polymerization in this manner is well known, and is described in U.S. Pat. No. 4.351.931 (Armitage). Other polymerization techniques are described in U.S. Pat. No. 5,028,674 (Hatch et al.) and U.S. Pat. No. 5,057,593 (Statz).

The silane coupling agents used in the Experiments are listed in Table 1 below.

**Table 1: Silane coupling agents**

| **Name** | **Chemical Name** | **Chemistry and function** |
|---|---|---|
| Silane 1 | (3-Aminopropyl)trimethoxysilane (CAS 13822-56-5) | Aminosilane coupling agent |
| Silane 2 | (3-Aminopropyl)triethoxysilane (CAS 919-30-2) | Aminosilane coupling agent |
| Silane 3 | 3-Aminopropyl(diethoxy)methylsilane (CAS 3179-76-8) | Aminosilane coupling agent |
| Silane 4 | N-[3-(Trimethoxysilyl)propyl]ethylenediamine (CAS 1760-24-3) | Aminosilane coupling agent |
| Silane 5 | (3-((2-Aminoethyl)amino)propyl)silanetriol (CAS 68400-09-9) | Hydrolyzed aminosilane coupling agent |
| SCA-613* | 3-Triethoxysilylpropyl)ethylenediamine (CAS 5089-72-5) | Amino silane coupling agent |

| | | |
|---|---|---|
| * Supplied by Guotai Huarong New Chemical Materials Co., Ltd. | | |

### Sample Preparation Process

### Compounding

Referring to the samples of Tables 2 and 3, the Tie resin 1 and Tie resin 2were fed into a Brabender mixer at 150 °C wherein the rotor speed was set at 40 rpm until the polymers melt. The resin mixture was rotated at 40 rpm for another 5 min. The compound was then cut into small pieces for further use

### Film Preparation

Small pieces of compound was then placed between two Mylar sheets before being sandwiched in a hot press machine and preheated at 150 °C for 10 min. The pressed compound was vented eight (8) times, then was held at 150 °C and 10 MPa (pressure between upper and lower plates of hot press machine) for another 5 min. Next, the film was cooled to room temperature within 5 mins at 10 MPa pressure. The film thickness for all of the film samples of table was 100 µm.

### Laminate preparation

The films were sandwiched between two (2) pieces of PVC film with dimensions of 10 cm X 10 cm. Prior to be being sandwiched, the silane composition or Tables 2 and 3 were added as a primer layer onto the PVC film. Specifically, the silane composition was diluted by solvent (ethanol) to produce 2 wt.% silane solutions. The silane solutions are coated onto the PVC surface and then dried at 60 °C for 3 mins to remove the solvent. The loading of silane was calculated as following Equation 1:
$W = \left(W2-W1\right) * 100 ;$ Equation 1

Where: W is the silane loading (gram/m²); W1 is the weight of 10 X 10 cm² of PVC film; W2 is the total weight of PVC and dried silane primer.

Then the primed PVC samples were laminated at a temperature of 180 °C and a pressure of 0.8 MPa for 10 seconds. The laminated sheets, which are listed in Table 2 and 3, were cut into specimens of 10 cm X 2.5 cm for further testing. Peel strength results are provided below.

**Table 2: Peel Strength of laminates with and without silane primer**

| **Component** | **SI Unit** | **CE-1** | **IE-1** | **IE-2** | **IE-3** | **IE-4** | **IE-5** | **IE-6** |
|---|---|---|---|---|---|---|---|---|
| Tie resin 2 | Wt.% | 100 | 100 | 100 | 100 | 100 | 100 | 100 |
| Silane 1 | g/m² | | 5~10 | | | | | |
| Silane 2 | g/m² | | | 5~10 | | | | |
| Silane 3 | g/m² | | | | 5~10 | | | |
| Silane 4 | g/m² | | | | | 5~10 | | |
| Silane 5 | g/m² | | | | | | 5~10 | |
| Silane SCA-613 | g/m² | | | | | | | 5~10 |
| 180° Peel strength @ 50°C | (N/mm) | 0.42±0.03 | >2.0 | >2.0 | >2.0 | >2.0 | >2.0 | 1.78±0.16 |
| Note | | Adhesive failure | PVC broke | PVC broke | PVC broke | PVC broke | PVC broke | Cohesive failure |

| | | | | | | | | |
|---|---|---|---|---|---|---|---|---|
| CE - Comparative Example IE - Inventive Example | | | | | | | | |

Referring to Table 2, Comparative Example 1 (CE-1), which includes Tie Resin 2 without the priming of silane, exhibited a 180° peel strength of 0.42±0.03 N/mm at 50 °C. In contrast, the Inventive Examples (IE), which were primed with silane, demonstrated peel strengths of 1.78 N/mm or greater. From a qualitative standpoint, most of the IE samples show resulted in the PVC being broken or cohesive failure.

**Table 3: Peel Strength data of laminates comprising tie layer polymer blends with and without silane primer**

| **Component** | **Tie resin 1 (wt. %)** | **Tie resin 2 (wt. %)** | **Silane 4 (g/m² of Primer)** | **180° Peel strength** @ **50 °C (N/mm)** |
|---|---|---|---|---|
| **IE-7** | 90 | 10 | 5~10 | 1.55±0.02 |
| **IE-8** | 70 | 30 | 5~10 | 1.56±0.21 |
| **CE-2** | 50 | 50 | - | 0.98±0.15 |
| **IE-9** | 50 | 50 | 5~10 | 1.46±0.12 |
| **CE-3** | 30 | 70 | - | 0.68±0.04 |
| **IE-10** | 30 | 70 | 5~10 | 1.49±0.12 |
| **CE-4** | 10 | 90 | - | 0.54±0.05 |
| **IE-11** | 10 | 90 | 5~10 | 1.52±0.07 |
| **CE-5** | 5 | 95 | - | 0.63±0.08 |
| **IE-12** | 5 | 95 | 5~10 | 1.89±0.04 |

Table 3 shows the peel strength of blends of Tie resin 2 and Tie resin 1 with and without silane primer. As shown, all the IE samples demonstrate higher peel strength than none primed CE samples, showing the advantages of the tie layer-silane primer.

It will be apparent that modifications and variations are possible without departing from the scope of the disclosure defined in the appended claims. More specifically, although some aspects of the present disclosure are identified herein as preferred or particularly advantageous, it is contemplated that the present disclosure is not necessarily limited to these aspects.

## Claims

1. A multi-layer structure comprising at least one polyvinyl chloride (PVC) layer, at least one metal layer, and at least one tie layer adhering the metal layer to the PVC layer,
wherein the tie layer comprises:
5 to 90 wt.% of at least one ethylene acrylate copolymer, wherein the acrylate is selected from vinyl acetate, alkyl acrylate, or maleic anhydride mono ester; and
5 to 95 wt.% of terpolymer represented by the formula of E/V/W, wherein E is ethylene, V is an acrylic ester comonomer selected from vinyl acetate, alkyl acrylate, or maleic anhydride mono ester, and W is a functional group selected from an epoxy, maleic anhydride, and a carboxyl group;
wherein the multi-layer structure includes silane coupling agent disposed in the tie layer, applied as a primer layer onto the PVC layer, or both, wherein the silane coupling agent comprises a structure of Z-(CH₂)ₙ-SiX_{q}Y_{3-q}, where n = 1-16; X=CH₃O or C₂H₅O-; q = 1,2, or 3; Y = H, C₁-C₂₀ alkyl, aryl, CH₃OH- or C₂H₅O-; Z = H₂N-, CH₂ = CH-, CH₂ = C(CH₃)-COO-, Epoxy - CH₂O, NH-, OH-, or HS-.

2. The multi-layer structure of claim 1, wherein the silane comprises the structure of one or more of the following structures:

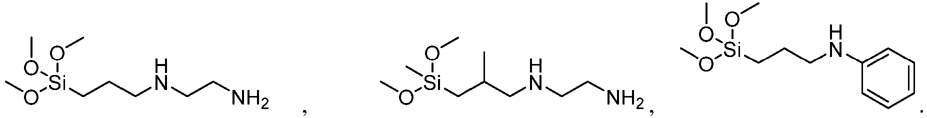

3. The multi-layer structure of any preceding claim, wherein the metal layer comprises steel or aluminum.

4. The multi-layer structure of any preceding claim, wherein the silane coupling agent is in the primer layer.

5. The multi-layer structure of claim 4, wherein the primer layer is applied at an amount of 0.01 to 100 g/m².

6. The multi-layer structure of claim 1, wherein the silane coupling agent is compounded in the tie layer.

7. The multi-layer structure of claim 6, wherein the tie layer comprises from 0.01 to 10 wt.% silane coupling agent.

8. The multi-layer structure of any preceding claim, wherein Z= H₂N-.

9. The multi-layer structure of any preceding claim, wherein the alkyl acrylate comprises methyl acrylate, methacrylate, ethyl acrylate, or n-butyl acrylate or isobutyl acrylate.

10. The multi-layer structure of any preceding claim, wherein the ethylene acrylate copolymer comprises from 0.1 to less than 50 wt.% acrylate.

11. The multi-layer structure of any preceding claim, wherein the epoxy monomer comprises glycidyl methacrylate.

12. The multi-layer structure of any preceding claim, wherein the terpolymer comprises from 0.1 to 50 wt.% of acrylic ester comonomer V.

13. The multi-layer structure of any preceding claim, wherein the terpolymer comprises from 0.1 to 50 wt.% of functional group W.

14. The multilayer structure of any one of claims 1 to 13, wherein functional group W is an epoxy group.

15. An anti-corrosion panel comprising any of the multi-layer structures of any preceding claim.

## Patentansprüche

1. Mehrschichtige Struktur, umfassend mindestens eine Polyvinylchloridschicht (PVC-Schicht), mindestens eine Metallschicht und mindestens eine Haftvermittlerschicht, die die Metallschicht an die PVC-Schicht anhaftet,
wobei die Haftvermittlerschicht umfasst:
zu 5 bis 90 Gew.-% mindestens ein Ethylen-Acrylat-Copolymer, wobei das Acrylat aus Vinylacetat, Alkylacrylat oder Maleinsäureanhydridmonoester ausgewählt ist; und
zu 5 bis 95 Gew.-% Terpolymer, dargestellt durch die Formel E/V/W, wobei E Ethylen ist, V ein Acrylester-Comonomer ist, das aus Vinylacetat, Alkylacrylat oder Maleinsäureanhydridmonoester ausgewählt ist, und W eine funktionelle Gruppe ist, die aus aus einem Epoxy, Maleinsäureanhydrid und einer Carboxylgruppe ausgewählt ist;
wobei die mehrschichtige Struktur ein Silankopplungsmittel einschließt, das in der Haftvermittlerschicht angeordnet ist, als Grundierungsschicht auf die PVC-Schicht aufgebracht ist, oder beides, wobei das Silankopplungsmittel eine Struktur von Z-(CH₂)ₙ-SiX_{q}Y_{3-q} umfasst, wobei n = 1-16; X=CH₃O oder C₂H₅O-, q = 1, 2 oder 3; Y = H, C₁-C₂₀-Alkyl, Aryl, CH₃OH- oder C₂H₅O-; Z = H₂N-, CH₂ = CH-, CH₂ = C(CH₃)-COO-, Epoxy-CH₂O, NH-, OH- oder HS-.

2. Mehrschichtige Struktur nach Anspruch 1, wobei das Silan die Struktur einer oder mehrerer der folgenden Strukturen umfasst:

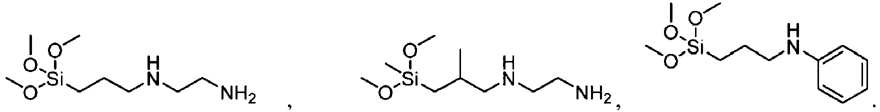

3. Mehrschichtige Struktur nach einem der vorstehenden Ansprüche, wobei die Metallschicht Stahl oder Aluminium umfasst.

4. Mehrschichtige Struktur nach einem der vorstehenden Ansprüche, wobei das Silankopplungsmittel in der Grundierungsschicht vorhanden ist.

5. Mehrschichtige Struktur nach Anspruch 4, wobei die Grundierungsschicht in einer Menge von 0,01 bis 100 g/m² aufgebracht ist.

6. Mehrschichtige Struktur nach Anspruch 1, wobei das Silankopplungsmittel in der Haftvermittlerschicht compoundiert ist.

7. Mehrschichtige Struktur nach Anspruch 6, wobei die Haftvermittlerschicht zu 0,01 bis 10 Gew.-% Silankopplungsmittel umfasst.

8. Mehrschichtige Struktur nach einem der vorstehenden Ansprüche, wobei Z = H₂N-.

9. Mehrschichtige Struktur nach einem der vorstehenden Ansprüche, wobei das Alkylacrylat Methylacrylat, Methacrylat, Ethylacrylat oder n-Butylacrylat oder Isobutylacrylat umfasst.

10. Mehrschichtige Struktur nach einem der vorstehenden Ansprüche, wobei das Ethylenacrylat-Copolymer zu 0,1 bis weniger als 50 Gew.-% Acrylat umfasst.

11. Mehrschichtige Struktur nach einem der vorstehenden Ansprüche, wobei das Epoxymonomer Glycidylmethacrylat umfasst.

12. Mehrschichtige Struktur nach einem der vorstehenden Ansprüche, wobei das Terpolymer zu 0,1 bis 50 Gew.-% Acrylester-Comonomer V umfasst.

13. Mehrschichtige Struktur nach einem der vorstehenden Ansprüche, wobei das Terpolymer zu 0,1 bis 50 Gew.-% die funktionelle Gruppe W umfasst.

14. Mehrschichtige Struktur nach einem der Ansprüche 1 bis 13, wobei die funktionelle Gruppe W eine Epoxygruppe ist.

15. Korrosionsschutzpaneel, umfassend eine beliebige der mehrschichtigen Strukturen nach einem der vorstehenden Ansprüche.

## Revendications

1. Structure multicouche comprenant au moins une couche de polychlorure de vinyle (PVC), au moins une couche de métal et au moins une couche de liaison faisant adhérer la couche de métal à la couche de PVC,
dans laquelle la couche de liaison comprend :
5 à 90 % en poids d'au moins un copolymère éthylène-acrylate, dans laquelle l'acrylate est choisi parmi acétate de vinyle, acrylate d'alkyle, ou monoester d'anhydride maléique ; et
5 à 95 % en poids d'un terpolymère représenté par la formule E/V/W, dans laquelle E représente éthylène, V représente un comonomère d'ester acrylique choisi parmi acétate de vinyle, acrylate d'alkyle, ou monoester d'anhydride maléique, et W représente un groupe fonctionnel choisi parmi époxy, anhydride maléique, et groupe carboxyle ;
dans laquelle la structure multicouche comporte un agent de couplage silane disposé dans la couche de liaison, appliqué en tant que couche d'apprêt sur la couche de PVC, ou les deux, dans laquelle l'agent de couplage silane comprend une structure Z-(CH₂)ₙ-SiX_{q}Y_{3-q}, où n = 1 à 16 ; X = CH₃O ou C₂H₅O- ; q = 1, 2 ou 3 ; Y = H, alkyle en C₁-C₂₀, aryle, CH₃OH- ou C₂H₅O- ; Z = H₂N-, CH₂=CH-, CH₂=C(CH₃)-COO-, époxy-CH₂O, NH-, OH- ou HS-.

2. Structure multicouche selon la revendication 1, dans laquelle le silane comprend la structure d'une ou de plusieurs des structures suivantes :

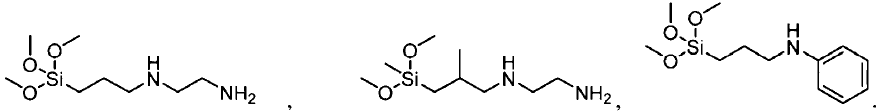

3. Structure multicouche selon l'une quelconque revendication précédente, dans laquelle la couche de métal comprend de l'acier ou de l'aluminium.

4. Structure multicouche selon l'une quelconque revendication précédente, dans laquelle l'agent de couplage silane se trouve dans la couche d'apprêt.

5. Structure multicouche selon la revendication 4, dans laquelle la couche d'apprêt est appliquée à une quantité allant de 0,01 à 100 g/m².

6. Structure multicouche selon la revendication 1, dans laquelle l'agent de couplage silane est concentré dans la couche de liaison.

7. Structure multicouche selon la revendication 6, dans laquelle la couche de liaison comprend 0,01 à 10 % en poids d'agent de couplage silane.

8. Structure multicouche selon l'une quelconque revendication précédente, dans laquelle Z = H₂N-.

9. Structure multicouche selon l'une quelconque revendication précédente, dans laquelle l'acrylate d'alkyle comprend acrylate de méthyle, méthacrylate, acrylate d'éthyle, ou acrylate de n-butyle ou acrylate d'isobutyle.

10. Structure multicouche selon l'une quelconque revendication précédente, dans laquelle le copolymère éthylène-acrylate comprend 0,1 à moins de 50 % en poids d'acrylate.

11. Structure multicouche selon l'une quelconque revendication précédente, dans laquelle le monomère époxy comprend du méthacrylate de glycidyle.

12. Structure multicouche selon l'une quelconque revendication précédente, dans laquelle le terpolymère comprend 0,1 à 50 % en poids de comonomère d'ester acrylique V.

13. Structure multicouche selon l'une quelconque revendication précédente, dans laquelle le terpolymère comprend 0,1 à 50 % en poids du groupe fonctionnel W.

14. Structure multicouche selon l'une quelconque des revendications 1 à 13, dans laquelle le groupe fonctionnel W est un groupe époxy.

15. Panneau anticorrosion comprenant l'une quelconque des structures multicouches selon l'une quelconque revendication précédente.
